# EUROPÄISCHE PATENTSCHRIFT

(11) **EP 1 610 981 B1**
(45) Veröffentlichungstag und Bekanntmachung des Hinweises auf die Patenterteilung: **05.03.2008**
(21) Anmeldenummer: 03767383.7
(22) Anmeldetag: 21.10.2003
(51) Int. Cl.: B60R 21/01

(54) **VORRICHTUNG ZUR ANSTEUERUNG VON RÜCKHALTEMITTELN IN EINEM FAHRZEUG**
DEVICE FOR CONTROLLING RESTRAINING MEANS IN A VEHICLE
DISPOSITIF POUR COMMANDER DES MOYENS DE RETENUE DANS UN VEHICULE

(30) Priorität: 03.03.2003 DE 10309081
(43) Veröffentlichungstag der Anmeldung: 04.01.2006
(73) Patentinhaber: ROBERT BOSCH GMBH, 70442 Stuttgart (DE)
(72) Erfinder: GAUKEL, Harald, 74076 Heilbronn (DE); LOECKLE, Gerhard, 71634 Ludwigsburg (DE); WALZ, Volker, 74321 Bietigheim-Bissingen (DE)
(86) Internationale Anmeldenummer: PCT/DE2003/003482
(87) Internationale Veröffentlichungsnummer: WO 2004/078529

(56) Entgegenhaltungen:
- DE-A- 10 117 220
- DE-A- 19 610 833
- DE-A- 19 913 675
- DE-C- 10 138 764

## Beschreibung

### Stand der Technik

Die Erfindung geht aus von einer Vorrichtung zur Ansteuerung von Rückhaltemitteln in einem Fahrzeug nach der Gattung des unabhängigen Patentanspruchs.

Aus DE 199 13 675 A1 ist es bekannt, dass bei der Ansteuerung von Rückhaltemitteln die Eigengeschwindigkeit des Fahrzeugs berücksichtigt wird.

Aus DE 10138 764 C1 ist es bekannt, dass aus Signalen eines Upfrontsensors eine Plausibilisierung für eine Ansteuerungsentscheidung für Rückhaltemittel gebildet wird. Aus der gattungsgemäßen DE 196 10 833 A1 ist es bekannt, dass die Ansteuerung von Personenschutzmitteln in Abhängigkeit von der Aufprallstärke und der Geschwindigkeit des Fahrzeugs vor dem Aufprall bzw. Zusammenstoss erfolgt.

### Vorteile der Erfindung

Die erfindungsgemäße Vorrichtung zur Ansteuerung von Rückhaltemitteln für ein Fahrzeug mit den Merkmalen des unabhängigen Patentanspruchs hat Vorteile. Es ist bekannt, dass nunmehr durch das Signal wenigstens eines ausgelagerten Sensors die Eigengeschwindigkeit in Fahrzeuglängsrichtung (x-Richtung) oder Fahrzeugquerrichtung (y-Richtung) selbst plausibilisiert wird, bevor die Eigengeschwindigkeit bei der Ansteuerung der Rückhaltemittel und insbesondere bei der Bildung der Auslöseentscheidung berücksichtigt wird. Dies führt zu einer höheren Sicherheit gegenüber Fehlauslösungen, wie sie beispielsweise bei schnellen Schlaglochdurchfahrten oder Bordsteinkantenüberfahrten vorkommen könnten. Wird dafür ein ausgelagerter Sensor verwendet, so zeigt dieses Signal, ob tatsächlich ein Crash vorliegt und dann in der Abhängigkeit von der Eigengeschwindigkeit der Auslösealgorithmus stärker sensibilisiert werden kann, d.h. schärfer geschaltet wird. Dies wird üblicherweise dadurch erreicht, dass entweder auf das Crash-Signal ein Zuschlag gegeben wird oder die Auslöseschwelle betragsmäßig gesenkt wird. Damit kann bei hohen Eigengeschwindigkeiten, bei denen ein starker Crash zu erwarten ist, ein früheres Auslösesignal erzeugt werden, um schneller die Rückhaltemittel ansteuern zu können. Dies führt zu einer erhöhten Sicherheit der Fahrzeuginsassen.

Der ausgelagerte Sensor ist ein Upfront-Sensor. Der Upfront-Sensor weist zur Erzeugung des Plausibilitätssignals für die Eigengeschwindigkeit eine eigene Plausibilitätsschwelle auf, die erheblich niedriger ist als eine Auslöseschwelle zur Erzeugung eines Crash-Signals. Diese Schwellen werden dabei üblicherweise im zentralen Steuergerät mit den Signalen des Upfront-Sensors verglichen. Sie können jedoch alternativ auch durch eine eigene Recheneinheit beim Upfront-Sensor selbst berechnet werden. Diese Schwellen können dynamisch mit der Zeit verändert werden. Es ist im übrigen möglich, mehr als eine Schwelle zu verwenden. Um solche Fehlauslösungen wie bei Bordsteinüberfahrten oder Schlaglochdurchfahrten am besten zu reagieren, ist es vorteilhaft, dass der ausgelagerte Sensor Empfindlichkeit in Fahrtrichtung hat, also in x-Richtung.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Rückhaltemitteln in einem Fahrzeug möglich.

Der Upfrontsensor kann vorteilhafterweise ein Beschleunigungssensor sein, der beispielsweise auch in der Seite des Fahrzeugs als Seitenaufprallsensor eingebaut werden kann. Der Sensor kann dabei in Fahrtrichtung empfindlich sein, aber auch zusätzlich in y-, also in Fahrzeugquerrichtung oder in z-Richtung, also in Fahrzeugvertikalrichtung. Der oder die Sensoren können auch winklig zur x-, y- oder z-Richtung angeordnet sein. Auch ein Fußgängeraufprallsensor kann hier verwendet werden oder auch indirekte Verformungssensoren, wie Drucksensoren oder Temperatursensoren, die in weitgehend abgeschlossenen Hohlräumen im Fahrzeug eingebaut sind, um einen Aufprall über einen adiabatischen Druckanstieg zu messen.

Die Eigengeschwindigkeit kann vorzugsweise in Klassen eingeteilt werden, beispielsweise in vier Klassen, um nach dieser Klasseneinteilung dann die Schwelle, mit der wenigstens ein Crash-Signal zur Bildung der Auslöseentscheidung verglichen wird, zu verändern. Bei hohen Geschwindigkeiten wird auf das Crash-Signal ein hoher Zuschlag gegeben oder die Schwelle entsprechend abgesenkt. Unter einem Crash-Signal wird hier ein Signal eines Aufprallsensors wie einem Beschleunigungssensor oder einem Drucksensor verstanden. Auch andere Verformungssensoren können ein solches Crash-Signal liefern.

Es werden hier insbesondere für die Plausibilisierung der Eigengeschwindigkeit zwei Möglichkeiten vorgeschlagen: Zum einen eine direkte Plausibilisierung durch das Ergebnis des Upfront-Algorithmus bei einer Veränderung der Schwelle im Frontalgorithmus in Abhängigkeit von der Geschwindigkeit, also der Algorithmus, welcher für einen Frontaufprall berechnet wird, und zum anderen eine indirekte Plausibilisierung über einen Schwellenveränderung in Abhängigkeit von der Eigengeschwindigkeit im Upfrontalgorithmus, wobei dann der Upfrontalgorithmus auf den Frontalgorithmus in bezug auf die Schwellenveränderung im Frontalgorithmus wirkt. Im zweiten Fall wird also eine implizite Plausibilisierung erreicht: Erkennt der Upfront-Algorithmus bei einer durch die Eigengeschwindigkeit veränderten Schwelle keine Schwellenüberschreitung ist hiermit bereits die Plausibilisierung der Eigengeschwindigkeit erreicht.

Im ersten Fall erkennt der Upfront-Algorithmus bei einer nicht von der Eigengeschwindigkeit abhängigen Schwelle keine Schwellenüberschreitung wird dadurch ein Frontalgorithmus, der eine Schwellenveränderung in Abhängigkeit von der Eigengeschwindigkeit erfahren hat, derart beeinflusst, dass ein Fehlauslöser (Misuse) keine Auslösung bewirkt. Die Schwelle im Frontalgorithmus wird also nicht abgesenkt.

### Zeichnung

Ausführungsbeispiele der Erfindung sind in der Zeichnung dargestellt und werden in der nachfolgenden Beschreibung näher erläutert.

Es zeigt Figur 1 ein Blockschaltbild der erfindungsgemäßen Vorrichtung, Figur 2 ein erstes Flussdiagramm, Figur 3 ein zweites Flussdiagramm, Figur 4 ein erstes dV/Zeitdiagramm, Figur 5 ein zweites dV/Zeitdiagramm, Figur 6 ein drittes Flussdiagramm und Figur 7 ein drittes dV/Zeitdiagramm.

### Beschreibung

Ein Airbagsteuergerät steuert verschiedene Rückhaltemittel je nach Unfallart und Unfallschwere entsprechend einem Auslösealgorithmus an. Dafür werden im Fahrzeug verschiedene Sensoren verwendet. Zum einen gibt es das zentrale Steuergerät, das im Fahrzeuginneren z. B. auf dem Tunnel unter dem Radio sitzt und den Auslösealgorithmus selbst rechnet. Dieses Steuergerät sammelt Sensordaten von ausgelagerten Sensoren, den sogenannten "Upfront-Sensoren", die beispielsweise am Fahrzeugkühler angeordnet sind und/oder auf Seitenaufprallsensoren, die an der A-, B- oder C-Säule oder in den Seitenteilen des Fahrzeugs angeordnet sind.

Die Upfront-Sensoren, die in der Knautschzone des Fahrzeugs sitzen, beeinflussen die Auslösung von Gurtstraffern und Frontairbags. Diese Sensoren bewirken, dass ein Crash vom Typ Offset-deformierbare Barriere (ODB) mit 40 % Offset und einer Geschwindigkeit von 54 km/h von einem sogenannten Reparatur-Crash mit 16 km/h auf eine harte Barriere unterschieden werden kann.

Mit gestiegenen Anforderungen, auch einen 40 km/h ODB-Crash rechtzeitig auszulösen, ohne den Reparatur-Crash zu gefährden, entstehen neue Anforderungen an die Sensorik.

Dafür wird vorgeschlagen, dass die Eigengeschwindigkeit des Fahrzeugs mit einbezogen wird. So werden z. B. drei bis vier verschiedene Geschwindigkeitsklassen verwendet, um die Auslöseschwellen unterschiedlich zu verändern. Diese Art der gesteigerten Sensibilisierung des Auslösealgorithmus, dass also beispielsweise eine Auslöseschwelle in Abhängigkeit von der Eigengeschwindigkeit gesenkt wird, birgt jedoch auch Gefahren. Diese Gefahr ist insbesondere dann gegeben, wenn es zu einer Bordsteinüberfahrt oder einer Schlaglochdurchfahrt kommt und dann wegen einer hohen Eigengeschwindigkeit zu einem sensibilisierten Auslösealgorithmus, der hier zu einer ungewollten Auslösung von Rückhaltemitteln führen kann.

Dafür wird eine zusätzliche Plausibilisierung durch die ausgelagerten Sensoren vorgeschlagen, um solche Fälle wie Schlaglochdurchfahrten und Bordsteinkantenüberfahrt zu isolieren.

Mit der Eigengeschwindigkeit des Fahrzeugs wird also zusätzlich erreicht, den Auslösealgorithmus zu sensibilisieren. So wird auf die Auslöseschwellen für Gurtstraffer, Airbag erste Stufe und Airbag zweite Stufe ein einstellbarer Wert addiert bzw. subtrahiert oder über einen Faktor das Auslöseverhalten verändert. Da dies auch bei schnellen, sogenannten "Misuse"-, also Fehlauslösungsfahrten, der Fall wäre, soll die Eigengeschwindigkeit durch einen zusätzlichen ausgelagerten Sensor plausibilisiert werden. Dies könnten z. B. einer oder beide Upfront-Sensoren übernehmen. Hier kann eine zusätzliche Plausibilitätsschwelle auf das Integral des Beschleunigungssignals des Upfront-Sensors eingeführt werden. Dies bewirkt, dass die Auslöseschwelle nur dann verändert wird, wenn am Upfront-Sensor entsprechende Beschleunigungssignale gemessen werden.

Bei Misuse-Situationen wie zum Beispiel Bordsteinüberfahrten oder Schlaglochdurchfahrten treten jedoch nur geringe Beschleunigungssignale am Upfront-Sensor auf. Die Plausibilität könnte jedoch nicht nur ein Upfront-Sensor, sondern auch jeder andere externe Beschleunigungssensor liefern, so beispielsweise auch ein Seitensatellit mit einer x-Messrichtung oder ein Sensor zum Fußgängerschutz. Die Plausibilitätsschwelle könnte wiederum empfindlicher eingestellt werden als die eigentlichen Upfront-Schwellen, um die Auslöseentscheidung zu bilden und würden daher zu einem früheren Zeitpunkt zu einer Auslöseentscheidung beitragen.

Hier wird mit Frontalgorithmus ein Algorithmus bezeichnet, mit dem die Auslösung von Rückhaltemitteln bei einem Frontcrash bestimmt wird. Dieser Algorithmus wird im zentralen Steuergerät berechnet. Es fließen Sensorsignale vom Steuergerät und von ausgelagerten Sensoren ein. Ein Upfront-Algorithmus ist ein Algorithmus; der auch im zentralen Steuergerät berechnet wird, jedoch lediglich anhand von Sensorsignalen von den Upfrontsensoren.

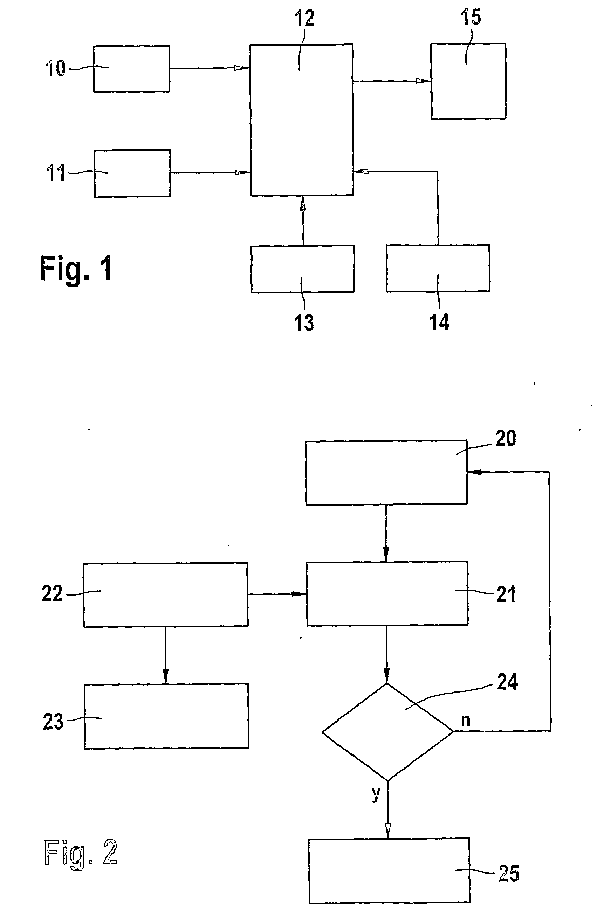

Figur 1 zeigt in einem Blockdiagramm die erfindungsgemäße Vorrichtung. Zwei Upfront-Sensoren 10 und 11 sind an Dateneingänge eines Steuergeräts für Rückhaltemittel 12 angeschlossen. Die Datenübertragung von den Upfront-Sensoren 10 und 11 ist hier unidirektional, d. h., die Upfront-Sensoren 10 und 11 liefern lediglich die Sensordaten an das Steuergerät 12, das mit diesen Sensordaten dann die Auswertungen durchführt. Es ist möglich, dass die Upfront-Sensoren 10 und 11 bereits selbst eine Vorauswertung durchführen und dann nur noch das Ergebnis dieser Vorauswertung an das Steuergerät 12 übertragen. Weiterhin ist es eine Alternative, dass eine bidirektionale Datenverbindung zwischen dem Steuergerät 12 und den Sensoren 10 und 11 vorliegt. In diesem Fall ist über einen Dialog eine Abfrage möglich. Eine weitere Alternative stellt ein Bus dar, der das Steuergerät 12 und die Sensoren 10 und 11 miteinander verbinden kann. Es liegt dann ein Sensorbus vor. Das Steuergerät 12 ist weiterhin über einen dritten Dateneingang mit einer Seitenaufprallsensorik 13 verbunden. Diese Seitenaufprallsensorik kann Beschleunigungssensoren oder Drucksensoren als indirekte Verformungssensoren umfassen. Auch hier liegt eine unidirektionale Verbindung vor, wobei auch hier alternativ eine Sensorbusverbindung oder eine bidirektionale Verbindung vorliegt. Über einen vierten Dateneingang ist das Steuergerät 12 mit einer Sensorik 14 verbunden, die die Eigengeschwindigkeit des Fahrzeugs liefert. Dieses Datum kann beispielsweise auf dem CAN-Bus des Fahrzeugs bereits vorliegen. Die Eigengeschwindigkeit wird dabei über ein Tachometer oder die Raddrehzahlen oder eine äquivalente Sensorik gewonnen. Das Steuergerät 12 ist dann über einen Datenausgang mit Rückhaltemitteln 15 verbunden, die beispielsweise Airbags, Gurtstraffer und Überrollbügel umfassen. Die Airbags und Gurtstraffer können mehrstufig ausgeführt sein. Auch die Rückhaltemittel können mit dem Steuergerät 12 über eine Busverbindung verbunden sein. Es handelt sich dann um einen sogenannten Zünd-Bus.

Die hierbei verwendeten Beschleunigungssensoren sind üblicherweise mikromechanisch hergestellt. Es sind jedoch auch andere Techniken zur Herstellung dieser Beschleunigungssensoren möglich. Die Beschleunigungssensoren weisen selbst Messverstärker, eine Digitalisierung und Senderbausteine hier auf. Sind andere Datenverbindung wie Bus oder bidirektionale Datenverbindungen vorgesehen, dann sind entsprechend Buscontroller oder Sende-/Empfangsbausteine vorzusehen.

Das Steuergerät 12 berechnet nun mit den externen Sensoriken, ob ein Auslösefall vorliegt und die Rückhaltemittel 15 angesteuert werden sollen. Dabei wird anhand der Sensorsignale, auch der im Steuergerät 12 befindlichen Sensoren, die Crash-Richtung, also die Crash-Art und die Schwere des Crashes bestimmt. Zusätzlich wird nun auch die Eigengeschwindigkeit des Fahrzeugs selbst dabei berücksichtigt, wobei die Eigengeschwindigkeit durch die Sensorik 14 bereitgestellt wird. Diese Eigengeschwindigkeit führt zu einer Schärferschaltung des Auslösealgorithmus, indem die Schwellen in Abhängigkeit von der Eigengeschwindigkeit des Fahrzeugs gesenkt oder erhöht werden. Um bei einem Misuse-Fall wie einer Bordsteinüberfahrt oder einer Schlaglochdurchfahrt mit einer hohen Geschwindigkeit den Auslösealgorithmus nicht unnötig zu sensibilisieren und damit gegebenenfalls nicht zu einer Fehlauslösung zu kommen, ist erfindungsgemäß vorgesehen, dass bei dieser Veränderung des Schwellwerts des Auslösealgorithmus das Signal der Upfront-Sensoren 10 und 11 dabei berücksichtigt wird. Zeigen die Signale dieser beiden Sensoren keinen Crash an, dann erfolgt keine Veränderung der Auslöseschwelle. Um dieses Plausibilitätssignal der Upfront-Sensoren 10 und 11 zu erzeugen, wird das Signal der Sensoren 10 und 11 mit einer Plausibilitätsschwelle verglichen, die niedriger ist als eine Auslöseschwelle, die diese Signale übertreffen müssen, um einen Auslösefall anzuzeigen.

Figur 2 visualisiert das Verfahren, das auf der erfindungsgemäßen Vorrichtung abläuft. In Verfahrensschritt 20 wird durch die Sensoren 10, 11 und 13 sowie die am Steuergerät 12 befindlichen ein Crash-Signal erzeugt. Dieses Crash-Signal wird in Verfahrensschritt 21 mit einer Auslöseschwelle verglichen, die dynamisch im Verlauf der Zeit verändert wird. Diese Schwelle wird aber hier, insbesondere in Abhängigkeit von der Eigengeschwindigkeit aus Verfahrensschritt 22, verändert. Dazu wird nun erfindungsgemäß die Eigengeschwindigkeit auch noch in Verfahrensschritt 23 durch das Signal der Sensoren 10 und 11 zusätzlich plausibilisiert. Zeigen die Signale der Sensoren 10 und 11, dass kein Crash vorliegt, sondern ein Nichtauslöseereignis, dann wird die Schwelle für den Schwellenvergleich in Verfahrensschritt 21 gleich belassen oder gar erhöht. In Verfahrensschritt 24 wird dann das Ergebnis dieses Schwellenvergleichs ausgewertet. Ist die Schwelle nicht überschritten worden, liegt kein Auslösefall vor und es wird zu Verfahrensschritt 20 zurückgesprungen, um weiter das Crash-Signal zu überprüfen. Das Crash-Signal wird, wie gesagt, durch die Crash-Sensoren, die Beschleunigungssensoren und Verformungssensoren, erzeugt. Wurde jedoch ein Auslösefall in Verfahrensschritt 24 festgestellt, kommt es in Verfahrensschritt 25 in Abhängigkeit von der Unfallschwere, der Insassenbesetzung und dem Crash-Typ zu einer Auslösung der geeigneten Rückhaltemittel in den entsprechenden Stärken.

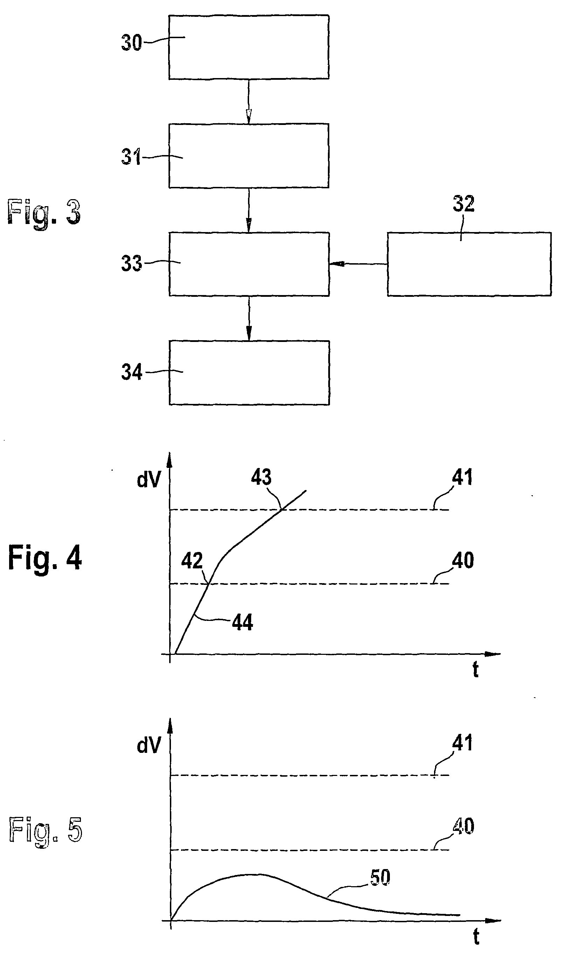

Figur 3 zeigt noch einmal im Detail den Ablauf der Plausibilisierung der Eigengeschwindigkeit. In Verfahrensschritt 30 wird durch die Sensorik 14 die Eigengeschwindigkeit bereitgestellt. In Verfahrensschritt 31 führt nun der Prozessor des Steuergeräts 12 eine Klassifizierung dieser Eigengeschwindigkeit vor. In Verfahrensschritt 33 wird dann der Schwellenzuschlag in Abhängigkeit von der Klasse 31 bestimmt. Hier wird nun jedoch zusätzlich berücksichtigt, ob in Verfahrensschritt 32 festgestellt wurde, dass überhaupt ein solcher Fall vorliegt, der eine Schwellenveränderung, also einen Schwellenzuschlag oder-abschlag, erforderlich macht. Die dann gegebenenfalls veränderte Schwelle wird in Verfahrensschritt 34 dem Algorithmus zugeführt.

Figur 4 zeigt in einem ersten dV/Zeitdiagramm ein Signal eines Upfront-Sensors 10, 11 im Vergleich mit einer Plausibilitätsschwelle 40 und einer Auslöseschwelle 41. In Figur 4 ist das Signal 44 im zeitlichen Verlauf dargestellt. Zum Zeitpunkt 42 überschreitet es die Plausibilitätsschwelle 40, sodass hier dem Algorithmus angezeigt wird, dass die Eigengeschwindigkeit zu einer Verschärfung des Algorithmus führen und es in Folge dessen zu einer Auslösung kommen kann. In Verfahrensschritt 43 wird nun auch die Auslöseschwelle 41 für den Upfront-Sensor überschritten, was unabhängig von der Eigengeschwindigkeit zu einer Verschärfung des Algorithmus führt.

Figur 5 zeigt ein zweites dV/t-Diagramm, wobei hier wiederum die Schwellen 40 und 41 dargestellt sind. Das nun vom Upfront-Sensor erzeugte Signal 50 erreicht während der betrachteten Zeit hier keine der Schwellen, sodass der Algorithmus keine Schwellenveränderungen in Abhängigkeit von der Eigengeschwindigkeit vornimmt. Gegebenenfalls wird sogar eine Schwellenerhöhung vorgenommen, um den Algorithmus unempfindlicher zu schalten, da gegebenenfalls ein Auslösefall wie eine Bordsteinüberfahrt oder eine Schlaglochdurchfahrt vorliegt.

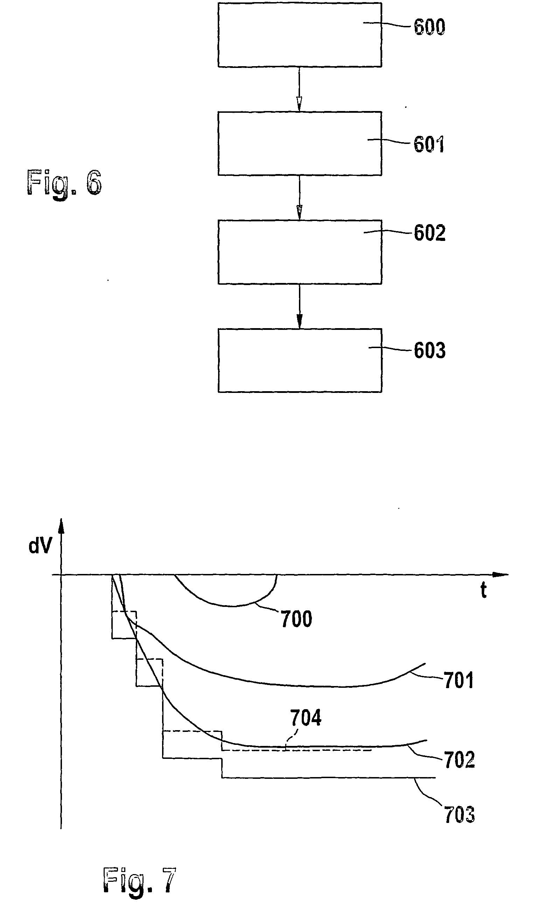

Fig. 6 zeigt ein drittes Flussdiagramm. In Verfahrensschritt 600 wird die Eigengeschwindigkeit ermittelt. In Abhängigkeit davon wird in Verfahrensschritt 601 die Schwelle für den Upfront-Algorithmus abgesenkt und damit eine Verschärfung dieses Algorithmus verursacht. Das Ergebnis des Upfront-Algorithmus wirkt jedoch in Verfahrensschritt 602 auf den Front-Algorithmus und zwar in bezug auf dessen Schwelle, so dass ein verschäfter Upfront-Algorithmus auch zu einer entsprechenden Absenkung der Schwelle des Frontalgorithmus führt. Die Auslöseentscheidung wird dann mit einem derart beeinflußten Frontalgorithmus getroffen. Dadurch kommt es zu einer impliziten Plausibilisierung der Eigengeschwindigkeit, denn nur, wenn der Upfront-Algorithmus eine Schwellenüberschreitung erkennt und damit einen Aufprall erkennt, wird der Frontalgorithmus bezüglich seiner Schwelle durch den Upfront-Algorithmus beeinflußt.

D.h. die Misuse-Fälle werden auch einen verschärften Upfront-Algorithmus nicht zu einer Auslöseentscheidung bringen und damit auch den Frontalgorithmus nicht.

Fig. 7 illustriert das Verhalten des Upfront-Algorithmus in einem dritten dVZeitdiagramm. Eine Schwelle 703 des Upfront-Algorithmus ändert sich in Abhängigkeit von der Zeit und der durch den Upfrontsensor ermittelten Beschleunigung. Diese Schwelle 703 wird in Abhängigkeit von der Eigengeschwindigkeit des Fahrzeugs bzw. der Geschwindigkeitsklasse abgesenkt, so dass damit die Schwelle 704 gültig ist. Aber selbst diese abgesenkte Schwelle 704 führt nicht dazu, dass ein Misuse-Fall wie eine Bordsteinüberfahrt zu einer Auslöseentscheidung, also einer Schwellenüberschreitung führt. Der Misuse-Fall ist hier mit der Kurve 700 dargestellt. Aber ein 40 km/h-ODB-Crash 701 führt hier zu einer Schwellenüberschreitung. Die Geschwindigkeitsklasse, nach der die Schwellenabsenkung erfolgt ist, ist die für 40 km/h. Während die Schwelle 703 selbst einen 15 km/h-Reparaturcrash 702 nicht als Auslösung identifiziert, d.h. die Schwelle 703 repräsentiert eine geringe Eigengeschwindigkeit, die einem 15 km/h-Reparaturcrash entspricht.

## Patentansprüche

1. Vorrichtung zur Ansteuerung von Rückhaltemitteln (15) in einem Fahrzeug, wobei die Vorrichtung derart konfiguriert ist, dass die Vorrichtung bei der Ansteuerung der Rückhaltemittel (15) eine Eigengeschwindigkeit des Fahrzeugs berücksichtigt, wobei die Vorrichtung derart konfiguriert ist, dass die Vorrichtung die Eigengeschwindigkeit in Abhängigkeit von einem Signal von wenigstens einem ausgelagerten Sensor berücksichtigt, **dadurch gekennzeichnet, dass** der wenigstens eine ausgelagerte Sensor (10,11) ein Upfront-Sensor ist und dass die Vorrichtung derart konfiguriert ist, dass die Vorrichtung das Signal des Upfront-Sensors (10, 11) mit einer Plausibilitätsschwelle (40) vergleicht, wobei die Plausibilitätsschwelle (40) unter einer Auslöseschwelle (41) zur Bildung des Crash-Signals des Upfront-Sensors (10, 11) liegt und in Abhängigkeit von diesem Vergleich die Eigengeschwindigkeit bei der Ansteuerung der Rückhaltemittel (15) Berücksichtigung findet.

2. Vorrichtung nach Anspruch 1, **dadurch gekennzeichnet, dass** der Sensor (10, 11) ein Beschleunigungssensor ist.

3. Vorrichtung nach Anspruch 1 oder 2, **dadurch gekennzeichnet, dass** die Vorrichtung derart konfiguriert ist, dass die Vorrichtung wenigstens eine Schwelle, mit der wenigstens ein Crash-Signal zur Ansteuerung der Rückhaltemittel verglichen wird, in Abhängigkeit von der Eigengeschwindigkeit verändert.

4. Vorrichtung nach Anspruch 3, **dadurch gekennzeichnet, dass** die Vorrichtung die Eigengeschwindigkeit in eine vorgegebene Klasse in Abhängigkeit von einer Höhe der Eigengeschwindigkeit einteilt und dann in Abhängigkeit von der Klasse die Schwelle verändert.

5. Vorrichtung nach einem der Ansprüche 1-4, **dadurch gekennzeichnet, dass** die Eigengeschwindigkeit zu einer Veränderung der Schwelle in einem Frontalgorithmus führt.

6. Vorrichtung nach einem der Ansprüche 1-4, **dadurch gekennzeichnet, dass** die Eigengeschwindigkeit zu einer Veränderung der Schwelle in einem Upfront-Algorithmus führt.

## Claims

1. Device for actuating restraining means (15) in a vehicle, the device being configured in such a way that the device takes into account an inherent speed of the vehicle during actuation of the restraining means (15), the device being configured in such a way that the device takes account of the inherent speed as a function of a signal from at least one external sensor, **characterized in that** the at least one external sensor (10, 11) is an upfront sensor, and **in that** the device is configured in such a way that the device compares the signal of the upfront sensor (10, 11) with a plausibility threshold (40), the plausibility threshold (40) lying below a triggering threshold (41) for forming the crash signal of the upfront sensor (10, 11), and the inherent speed being found as a function of this comparison during actuation of the restraining means (15).

2. Device according to Claim 1, **characterized in that** the sensor (10, 11) is an acceleration sensor.

3. Device according to Claim 1 or 2, **characterized in that** the device is configured in such a way that the device changes at least one threshold with which at least one crash signal is compared in order to actuate the restraining means, this being done as a function of the inherent speed.

4. Device according to Claim 3, **characterized in that** the device classifies the inherent speed into a prescribed class as a function of a level of the inherent speed and then changes the threshold as a function of the class.

5. Device according to one of Claims 1-4, **characterized in that** the inherent speed leads to a change in the threshold in a front algorithm.

6. Device according to one of Claims 1-4, **characterized in that** the inherent speed leads to a change in the threshold in an upfront algorithm.

## Revendications

1. Dispositif de commande des moyens de retenue (15) d'un véhicule, le dispositif étant configuré pour qu'à la commande des moyens de retenue (15) ils tiennent compte de la vitesse propre du véhicule,
le dispositif étant comparé pour tenir compte de la vitesse propre en fonction d'un signal d'au moins un capteur déporté,
**caractérisé en ce qu'**
au moins un capteur déporté (10, 11) est un capteur frontal et le dispositif est configuré pour comparer le signal du capteur frontal (10, 11) à un seuil de plausibilité (40),
le seuil de plausibilité (40) étant situé sous un seuil de déclenchement (41) pour former un signal de collision du capteur frontal (10, 11) et en fonction de cette comparaison, la vitesse propre est prise en compte pour commander les moyens de retenue (15).

2. Dispositif selon la revendication 1,
**caractérisé en ce que**
le capteur (10, 11) est un capteur d'accélération.

3. Dispositif selon la revendication 1 ou 2,
**caractérisé en ce que**
le dispositif est configuré pour modifier au moins un seuil auquel est comparé au moins un signal de collision pour commander les moyens de retenue, en fonction de la vitesse propre.

4. Dispositif selon la revendication 3,
**caractérisé en ce qu'**
il classe la vitesse propre dans une classe prédéfinie en fonction du niveau de la vitesse propre et il modifie le seuil en fonction de la classe.

5. Dispositif selon l'une des revendications 1 à 4,
**caractérisé en ce que**
la vitesse propre modifie le seuil dans un algorithme frontal.

6. Dispositif selon l'une des revendications 1 à 4,
**caractérisé en ce que**
la vitesse propre se traduit par une variation du seuil dans un algorithme frontal.
